Europäisches Patentamt

European Patent Office

Office européen des brevets

(11) Publication number: **0 300 662**
**A2**

## (12) EUROPEAN PATENT APPLICATION

(21) Application number: **88306313.3**

(22) Date of filing: **11.07.88**

(51) Int. Cl.4: **G01N 27/30 , G01N 27/00**

(30) Priority: **16.07.87 GB 8716809**

(43) Date of publication of application:
**25.01.89 Bulletin 89/04**

(84) Designated Contracting States:
**BE DE FR GB IT NL**

(71) Applicant: **IMPERIAL CHEMICAL INDUSTRIES PLC**
**Imperial Chemical House Millbank**
**London SW1P 3JF(GB)**

(72) Inventor: **Campbell, William Clelland**
**32 Hambleton Avenue**
**Redcar Cleveland(GB)**
Inventor: **Dowle, Christopher Jonathan**
**Flat 3/R 4 Balgair Terrace**
**Springboig Glasgow Scotland(GB)**

(74) Representative: **Martin, David Lincoln et al**
**Imperial Chemical Industries PLC Legal**
**Department: Patents PO Box 6 Bessemer**
**Road**
**Welwyn Garden City Herts, AL7 1HD(GB)**

(54) Ion-selective electrodes.

(57) An ion-selective electrode of improved performance, particularly in mixed solvent systems, for example in analysis of ionic surfactants, consists of a solid support, preferably spectrographically pure graphite, on which is deposited a polyvinylchloride membrane containing a minor proportion of an electroactive substance.

Fig.1.

TO POTENTIOMETER

EP 0 300 662 A2

EP 0 300 662 A2

## Ion-Selective Electrodes

The present invention relates to ion-selective electrodes and in particular to surfactant ion-selective electrodes.

Surfactant ion-selective electrodes are well known and have been the subject of much study. A number of successful electrodes have been designed and these have usually been based upon one or other of two distinct designs of liquid membrane electrodes. In one design, described by Gavach and Bertrand, Anal. Chim. Acta. 1971, 55, 385, a sensor membrane separates a reference (internal) and an analyte (external) solution. In the other design, described by Vytras, Dajkova and Mach, Anal. Chim. Acta. 1982, 127, 165 and by Selig, Anal. Lett. 1982, 15, 309, a sensor membrane is coated onto a solid substrate. In these designs it may be necessary to carry out some membrane conditioning prior to use of the electrode but conditioning is usually unnecessary if an electroactive substance is incorporated into the membrane.

Prior art electrodes which have incorporated electroactive substances in the membrane have been of the first of the two designs hereinbefore mentioned. Unfortunately, it has been found that these electrodes do not function properly, if at all, in cases where the solvent media contain mixed solvents and thereafter many are unusable.

Electrodes of the second of the hereinbefore mentioned designs and other electrodes (see Dilley, Analyst 1980, 105, 713) do not include any electroactive substance in the membrane and therefore require conditioning prior to use. However, preconditioning is destroyed by use in mixed solvent systems and the electrodes thereby rendered ineffectual because the surfactants adsorbed in the pre-conditioning are extracted into the solvent phase. (The membrane remains intact and can therefore be re-conditioned again in aqueous systems). Mixed solvent systems thus provide a difficult medium for the use of ion-selective electrodes and there is at present an unfulfilled demand for electrodes that can be used successfully in such systems.

We have surprisingly found that a successful ion-selective electrode for use in, inter alia, mixed solvent systems can be provided relatively inexpensively.

Accordingly the present invention provides an ion-selective electrode which comprises a solid metal support or similar support showing metallic conducting properties on which is deposited a polyvinylchloride (PVC) membrane containing a minor proportion of an electroactive substance.

Preferably the support is graphite, more preferably spectroscopically pure graphite.

Preferred electroactive substances include surfactant salts in amounts which are suitably less than 0.5% w/w of the membrane. The surfactant salt is chosen according to whether anonic surfactant or cationic surfactant selectivity is required. Suitable salts are those having ion-pairs where a large counter-ion surfactant is paired with a small, more mobile analyte-type ion surfactant thereby to enhance the selectivity for the desired ion and reduce counter-ion interference. A particularly suitable salt when anionic selectivity is required is n-hexadecyl-trimethylammonium 1-pentane sulphonate. When cationic selectivity is required a preferred salt is tetrabutylammonium dodecylsulphate. Other salts may be used but the chosen salt must promote the desired ionic mobility in the membrane since the analyte ion-exchange component is typically very small, mobile and will easily exchange into the solution phase to offer preferential sensing of any surfactant of the appropriate ionic type.

Electrodes according to this invention offer good Nernstian calibration with up to 20% v/v ethanol (aq) or 10% v/v hydrochloric acid present. This property is particularly pertinent to enable analysis of ionic surfactants present in fractions from an automatic ion-exchange separation system for commercial formulated surfactants such as is described in our co-pending European Patent Application No 245,940A. The solvent medium in such a system typically is 10% v/v hydrochloric acid and 90% v/v ethanol. Electrodes according to this invention will function very well for samples from such a separation system following a ten-fold dilution with water. Potentiometric titration is the analytical procedure which is usually used. Standard counter-surfactant ion solutions are titrated versus the analyte, and the electrode is anionic- or cationic-selective as required. A large potential end-point "break" is observed and this can be very simply extrapolated. The Applicants have found that comparison of this procedure employing the electrodes of the invention with the standard two-phase titration technique is good.

The electrodes of the invention are suitable for use in the quantification of a range of surfactant types, alkyl benzene sulphonates, alkyl sulphates, alkyl ether sulphates, quaternary ammonium salts and fatty amine oxides. The electrodes will operate over a wide range of homologues exhibiting little differential selctivity, a useful and desirable characteristic brought about by judicious choice of electroactive materials.

According to a further aspect of the present invention a method for preparing an ion-selective electrode comprises dipping at least part of a solid metal support or similar support showing metallic conducting

2

properties into a coating solution comprising polyvinylchloride and a minor amount of an electroactive substance for a period of time to coat the surface of said support with said solution, withdrawing the support from the solution and allowing the support to dry. The procedure is conveniently repeated at least once.

It is preferred to use a sheathed electrode support, for example a graphite rod sheathed in a glass tube which is fixed in place with an epoxy resin or the like.

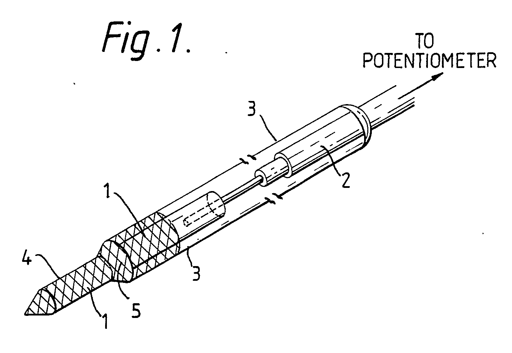

One embodiment of the present invention is hereinafter described with reference to the accompanying drawing which is a side elevation of an ion-selective electrode.

Referring to the drawing, a rod 1 of spectrochemically pure graphite is connected to coaxial cable 2 by insertion of the cable inner into a hole in the rod. The cable is fixed in place with epoxy resin. One end of the graphite rod 1 and a short length of the coaxial cable 2 connected to it is sheathed in a glass tube 3 secured with epoxy resin. The other end 4 of the graphite rod is unsheathed. This part of the rod and some of the glass sheath immediatey adjacent to it is coated with thin PVC membrane 5 (the membrane is indicated by the cross-hatching in the accompanying drawing).

The electrode was made by first connecting the graphite rod 1 to the coaxial cable 2 by insertion of the cable inner into a hole in the rod. Conduction was ensured using conducting paint. The cable was fixed in place with epoxy resin. The portion of the rod to which the cable is attached and a short length of the cable itself were sheathed in a glass tube 3 which was secured with epoxy resin. The unsheathed end 4 of the rod together with a short length of the sheathed portion were then dipped into a polyvinylchloride coating solution. The coating solution was prepared by adding tetrahydrofuran as solvent (optionally containing a minor amount of an antioxidant for example t-butyl catechol) to a mixture of PVC (molecular weight 100,000) 39.95% w/w, tritolyl-phosphate (plasticiser) 59.95% w/w and 0.1% w/w surfactant salt (electroactive substance).

After withdrawal from the coating solution the coated rod was allowed to dry in air for at least 30 minutes. The coating and drying process was then repeated twice.

The use of the electrode of this invention is further illustrated in the following examples.

## EXAMPLE 1

Differential selectivity coefficients ($K_{ij}$) were measured for an anionic surfactant selective electrode of the invention relative to sodium dodecyl sulphate.

The results are summarised in Table 1. A $K_{ij} > 1$ indicates preferential adsorption into the membrane. We have found that repeated determinations of these coefficients showed very little variation. The relatively small variation in $K_{ij}$ across a series of homologues is desirable for successful titration of samples containing many different surfactant types and homologues.

TABLE 1

| Sulphate-alkyl Chain Length | $C_8$ | $C_9$ | $C_{10}$ | $C_{11}$ | $C_{14}$ |
|---|---|---|---|---|---|
| ($K_{ij}$) | 0.55 | 0.84 | 0.85 | 0.94 | 2.17 |
| Sulphonate-alkyl chain length | $C_8$ | $C_9$ | $C_{10}$ | $C_{12}$ | $C_{16}$ |
| ($K_{ij}$) | 0.70 | 0.91 | 0.98 | 1.37 | 1.52 |

## EXAMPLE 2

Differential selectivity coefficients were measured for a cationic surfactant selective electrode of the invention relative to myristyltrimethylammonium bromide.

The results are summarised in Table 2 and once again determinations of the coefficients across a series of homologues showed very little variation.

3

TABLE 2

| Kij | Surfactant |
|------|------------|
| 0.02 | Tetrabutylammoniumhydroxide |
| 0.08 | Nonyltrimethylammoniumbromide |
| 0.18 | Dodecylammoniumbromide |
| 1.27 | Hexadecyltrimethylammoniumbromide |
| 2.25 | Hexadecylpyridiniumbromide |
| 3.15 | Benzethoniumchloride monohydrate (Hyamine 1622) |

EXAMPLE 3

A quantification of three industrial anionic surfactants was carried out by potentiometric titration using the anionic surfactant-selective electrode used in Example 1. The results obtained were compared to those obtained for the same samples using conventional two-phase titration. The comparisons are shown in Table 3 from which it can be seen that the values obtained using the two methods are substantially the same. The method of the invention is thus advantageous since it avoids errors which may occur in the two-phase titration arising from the subjectivity of the colorimetric end-point, the reactivity of the organic phase and the toxicity of the chloroform used in the two-phase titration.

TABLE 3

| SAMPLE | Aqueous Solution | | Diluted Eluant Solution | |
|--------|------------------|-----------|-------------------------|-----------|
|        | End Point Position | | End Point Position | |
|        | Potentiometric | Two-Phase | Potentiometric | Two-Phase |
| Caflon<br>SNA | 26.2<br>26.3<br>26.2 | 26.2<br>26.2<br>26.2 | 9.2<br>9.25<br>9.25 | 9.0<br>9.1<br>9.05 |
| Dobanol<br>Ether<br>Sulphate<br>(70%) | 16.3<br>16.3<br>16.3 | 16.2<br>16.2<br>16.2 | 15.0<br>15.05<br>15.0 | 15.3<br>15.2<br>15.2 |
| Synprol<br>Sulphate<br>(28%) | 16.3<br>16.4<br>16.3 | 16.4<br>16.4<br>16.4 | 14.8<br>14.9<br>14.8 | 14.7<br>14.7<br>14.8 |

EXAMPLE 4

Example 3 was repeated except that the samples tested were industrial cationic surfactants and the electrode used was that used in Example 2.

The results are compared in Table 4 and once again the two methods give substantially the same results.

TABLE 4

| SAMPLE | Aqueous Solution | | Diluted Eluant Solution | |
|---|---|---|---|---|
| | End Point Position | | End Point Position | |
| | Potentiometric | Two-Phase | Potentiometric | Two-Phase |
| Synprolam DMBQC (79.2%) | 19.1 19.1 19.1 | 19.3 19.3 19.3 | 22.0 21.9 22.0 | 22.3 22.2 22.3 |
| Ammonyx MO | 18.2 18.25 18.2 | 18.75 18.9 18.7 | 15.85 15.9 15.8 | 15.7 15.8 15.7 |
| Synprolam TMQC | 20.2 20.15 20.25 | 20.1 20.1 20.2 | 16.5 16.5 16.45 | 16.4 16.35 16.4 |

## EXAMPLE 5

Five commercial surfactant formulations were separated by the automatic ion-exchange separation process of our co-pending European Patent Application No 245,940A. Identical samples were diluted 10 times with water and then analysed three times by the conventional two-phase titration and by the potentiometric method using an electrode of the present invention. The results expressed as volumetric end-points are compared in Table 5.

TABLE 5

| SAMPLE | Determination of anionic surface-active matter | | Determination of cationic surface-active matter | |
|---|---|---|---|---|
| | End Point Position | | End Point Position | |
| | Potentiometric | Two-Phase | Potentiometric | Two-Phase |
| Washing-up Liquid A | 24.6 24.6 24.55 | 24.55 24.6 24.55 | None Present | |
| Washing-up Liquid B | 31.75 31.8 31.8 | 31.55 31.6 31.55 | None Present | |
| Commercial Washing Powder C | 24.6 24.6 24.6 | 24.5 24.5 24.5 | 4.25 4.15 4.2 | 4.2 4.2 4.15 |
| Commercial Washing Powder D | 2.0 2.05 2.0 | 1.9 1.9 1.8 | 0.50 0.55 0.50 | 0.70 0.65 0.75 |
| Commercial Washing Powder E | 29.75 29.8 29.7 | 30.0 30.05 30.0 | 1.40 1.40 1.35 | 1.40 1.40 1.40 |

## Claims

1. An ion-selective electrode which comprises a solid metal support or similar support showing metallic conducting properties on which is deposited a polyvinylchloride (PVC) membrane containing a minor proportion of an electroactive substance.

2. An ion-selective electrode as claimed in claim 1 wherein the electroactive substance comprises a surfactant salt.

3. An ion-selective electrode as claimed in claim 1 or 2 wherein the electroactive substance is selected from surfactant salts having ion-pairs in which a large counter-ion surfactant is paired with a small, more mobile analyte-type ion surfactant.

4. An ion-selective electrode as claimed in any one of the preceding claims wherein the electroactive substance comprises n-hexadecyl-trimethylammonium 1-pentane sulphonate.

5. An ion-selective electrode as claimed in any one of claims 1 to 3 wherein the electroactive substance comprises tetrabutylammonium dodecylsulphate.

6. An ion-selective electrode as claimed in any one of the preceding claims wherein the amount of electroactive substance is less than 0.5% w/w of the membrane.

7. An ion-selective electrode as claimed in any one of the preceding claims wherein the support is graphite.

8. An ion-selective electrode as claimed in claim 7 wherein the support comprises a spectroscopically pure graphite rod sheathed in a glass tube.

9. A method of preparation of an ion-selective electrode which comprises dipping at least part of a solid metal support or similar support showing metallic conducting properties into a coating solution comprising polyvinylchloride and a minor amount of an electroactive substance for a period of time to coat the surface of said support with said solution, withdrawing the support from the solution and allowing the support to dry.

10. A method as claimed in claim 9 wherein the support comprises a graphite rod sheathed in a glass tube and the electroactive substance comprises a surfactant salt.

11. Use of an ion-selective electrode as defined in any one of claims 1 to 8 for analysis of ionic surfactants.

EP 0 300 662 A2

# Fig.1.

TO
POTENTIOMETER

3

1

4

3

2

1

5